# EUROPEAN PATENT SPECIFICATION

(11) **EP 2 026 496 B1**
(45) Date of publication and mention of the grant of the patent: **09.11.2011**
(21) Application number: 08425512.4
(22) Date of filing: 28.07.2008
(51) Int. Cl.: H04L 12/10, H04N 5/225, H04N 7/18

(54) **Protection case for cameras which are capable of transmitting a digital video signal**
Schutzgehäuse für zur Übertragung von digitalen Videosignalen fähigen Kameras
Étui de protection pour caméras qui sont capables de transmettre un signal vidéo numérique

(30) Priority: 02.08.2007 IT VI20070213
(43) Date of publication of application: 18.02.2009
(73) Proprietor: Tekno System S.p.A., 36010 Carre' VI (IT)
(72) Inventor: Bertollo Conte, Giovanni Battista, 36010 Carré (VI) (IT)
(74) Representative: Petraz, Gilberto Luigi

(56) References cited:
- EP-A- 1 802 103
- KR-A- 20030 066 498
- US-A- 4 414 576
- US-A1- 2004 136 388
- US-A1- 2005 162 508
- US-B1- 6 448 899
- US-B1- 6 473 608
- KEITH HOPWOOD: "Power Rides on Ethernet Cables"[Online] 23 October 2006 (2006-10-23), XP002506815 Retrieved from the Internet: URL:http://web.archive.org/web/20061023024 346/www.phihong.com/assets/pdf/Power_Rides _on_Ethernet.pdf> [retrieved on 2008-11-27]
- PHIHONG: "14 W DC-DC Power Over Ethernet Splitter"[Online] 23 October 2006 (2006-10-23), XP002506816 Retrieved from the Internet: URL:http://web.archive.org/web/20061023023 910/http://www.phihong.com/assets/pdf/POE1 4.pdf> [retrieved on 2008-11-28]

## Description

The present invention relates to a protection case for cameras of the so-called "network cameras" or "IP cameras" type, which are able to transmit a digital video signal.

US 2004/136388 discloses a video monitor system disclosing the features of the preamble of claim 1.

Until a few years ago, the video surveillance was performed by means of one or more cameras with an output analog video signal.

The video signal was led, through an adequate coaxial cable, from the take point, where the camera was installed, to the other peripheral units for the vision, the registration and the whole operation of the surveillance plant.

For some years now, the so-called "network cameras" (or "IP cameras") are also available on the market for video-surveillance systems or closed circuit TV (CCTV), i.e. cameras where no output connections for transmitting an analog video signal are provided, but an Ethernet-type output connection is present.

Therefore, said cameras are able to transmit a digital video signal, through a computer network.

Some last-generation "network cameras" or "IP cameras" also support a particular operation mode, so-called "PoE" or "HiPoE" in a power extended version, according to which, through appropriate equipment placed in the network structure, it is possible to provide the camera with both the supply mains signal and the supply voltage that is required to operate said camera only by means of the mains cable.

Anyway, cameras must necessarily be protected from dust and weather in order to be placed both inside and outside the premises to be monitored and therefore suitable protection cases, equipped with adequate watertight, are used.

Said protection cases are normally equipped with fittings, which allow for correctly operating the camera and for a correct view of the shoot scene.

Said fittings are typically a heating resistor (or a PTC resistor), placed near the taking lens and controlled by a thermostat, which is used for avoiding the fogging of the taking windows, due to moisture or external low temperatures, and/or a cooling fan, which is used for achieving an adequate ventilation at high external or internal temperatures, making it possible to extract the heat generated by the camera and to take it outside the case, allowing the camera to operate in a proper range of operating temperatures.

As you can imagine, said fittings need a suitable supply voltage to work.

However, this need for a power supply source collides with the new technology of the "network cameras" operating according to the PoE or HiPoE mode, which, as we have seen, allows to feed only cameras which are compatible with said system, but does not allow to feed the fittings, thereby making impossible a proper installation of the assembly camera/case in external or internal environments.

Moreover, the system is obviously incompatible with the known "network cameras" or "IP cameras" or with the cameras which are only compatible with the digital network.

It is thus necessary to provide, in addition to the mains connection, an external electrical power source, which consequently involves an increase of work and of overall dimensions and cost-push for providing the installation.

Furthermore, this drawback does not allow the use of all known "network cameras" or "IP cameras" which are not compatible with the above-mentioned system.

It is therefore an object of the present invention to overcome the above-mentioned drawbacks and, in particular, to indicate a protection case for cameras capable of transmitting a digital video signal, which allows for a proper installation of the assembly camera/case, both in external environments and in internal environments, in a simple, quick and economic way.

Another object of the invention is to indicate a protective case for cameras capable of transmitting a digital video signal, which allows for using all known cameras of the so-called "network camera" or "IP camera" type, which are normally not compatible with the so-called PoE or HiPoE operating mode, according to which, through only the mains cable, it is possible to feed the camera both with the mains connection signal and with the supply voltage required to operate said camera itself.

Another object of the invention is to indicate a protection case for cameras capable of transmitting a digital video signal, which is extremely reliable and of simple and inexpensive implementation.

These and other objects, according to the present invention, are achieved by means of a protective case for cameras capable of transmitting a digital video signal, according to the enclosed claim 1. Other detailed technical features can be found in the dependent claims.

Advantageously, suitable separation and/or splitting devices (so-called "splitter") are provided in the protection case according to the invention, said devices having compatibility with the PoE or HiPoE system or being capable of supporting, through only the mains cable, both the mains connection signal and a supply voltage.

Said devices ("splitter") are able to provide their outputs with a mains connection which is separate from the supply voltage, allowing to connect a power supply source to the fittings that are essential for the proper functioning both of the camera and of the case (heating resistor, fan, etc.) and allowing also to correctly feed cameras of the so-called "network cameras" or "IP cameras" type, which are not directly compatible with the PoE or HiPoE operating mode.

Consequently, there is no need for the installer to provide separate power sources, with obvious savings in terms of low cost and simplicity of installation; moreover, there is greater safe with respect to the known techniques, because there is no longer need to have mains supply voltages, even dangerous, inside the case and the installer is thus able to access the known so-called "network camera" or "IP camera", although not compatible with the PoE or HiPoE operation mode; it is thus possible to choose freely the camera with the technical characteristics which are better suited to specific requests from the installer and on the basis of the availability of cameras.

Finally, using the protective case described in the present application, there are many advantages for the installer, both in terms of greater choice of cameras and in terms of easiness and convenience, economy and safeness.

Additional features and advantages of a protective case for cameras capable of transmitting a digital video signal, according to the present invention, will be more evident from the following description, relating to a preferred and not limited embodiment, and from the enclosed drawings, wherein:
- Figure 1 shows a partial exploded view of a protective case for cameras capable of transmitting a digital video signal, according to the present invention;
- Figures 2 and 3 show two perspective views of the protection case shown in Figure 1, according to this invention, when the electrical connections are made;
- Figure 4 is a perspective view of a partly assembled protective case for cameras, according to the present invention;
- Figure 5 is a perspective view of an assembled protective case for cameras, according to the present invention.

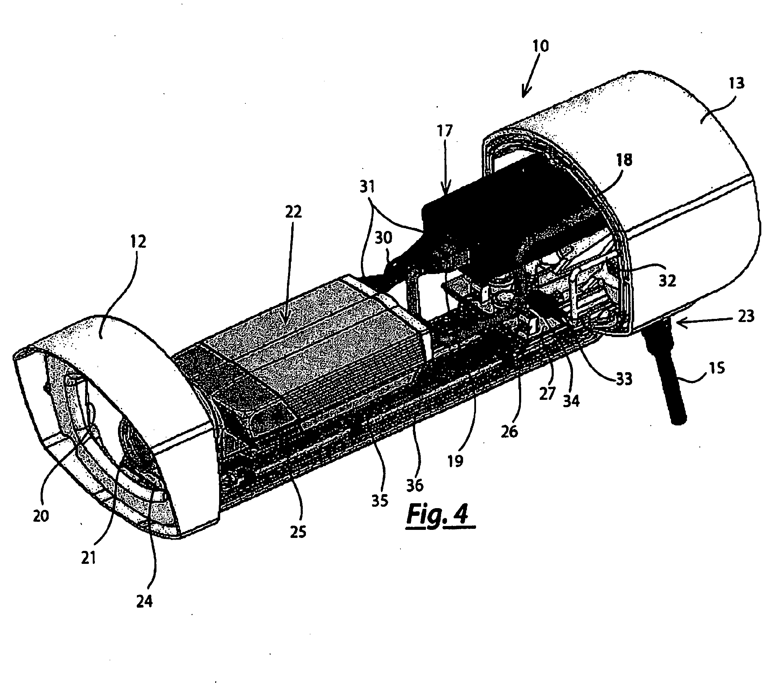

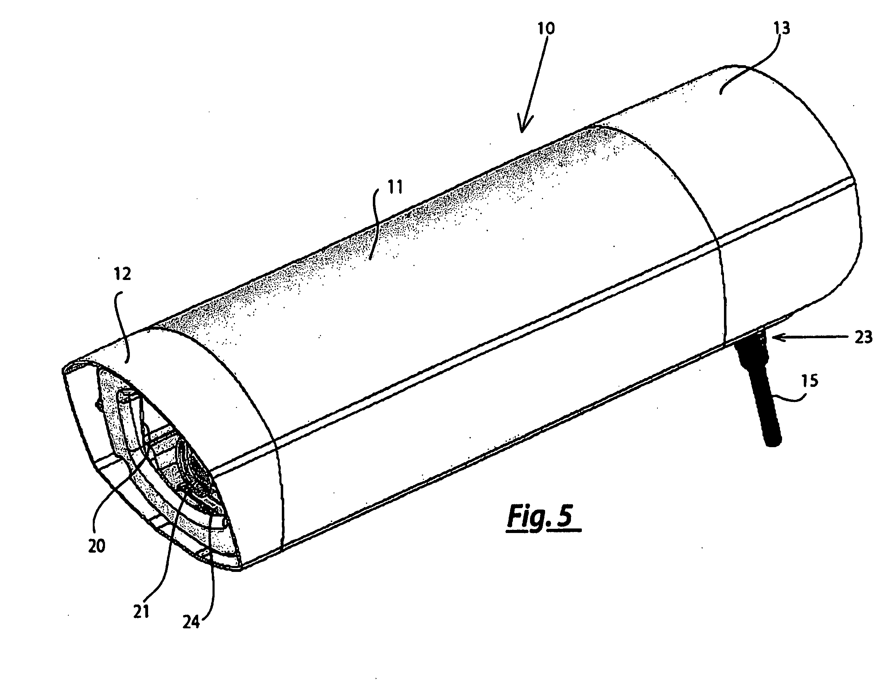

With reference to the above-mentioned figures, 10 generally indicates a protective case for cameras, according to the present invention, which, according to a preferred, but not limited, embodiment includes a central body 11, which is tubular-shaped and normally made from extruded aluminum, a front terminal portion 12, with a window or another shaped transparent element 20, which is located at a seat positioned at the lens 21 of the camera 22, and a rear terminal portion 13 having electrical connections for connecting the Ethernet cable 15 (Fig. 4-5); according to other embodiments, the protection case 10 may also include at least two bodies, one hinged with the other.

The invention relates particularly to a protective case 10 for video-surveillance cameras, which are so-called "network cameras" or "IP cameras", or for CCTV cameras, which have outputs with the electrical connections 23 for connecting the Ethernet-type cable 15, in order to transmit a digital video signal through a computer network.

The protection case 10 is normally equipped with technical fittings which are needed for a proper functioning of the camera 22 and for a correct view of the scene.

Said technical fittings can typically include at least one heater element 24 (a heating resistor or PTC), placed near the shooting window 20 and electrically connected, through the cable 25 which is laid on the internal sleigh 35 (associated with the external sleigh 36) of the case 10 and through the clamp 26, with a thermostat 8, which is mounted on the board 27, so as to avoid the steaming up of the shooting window 20 because of humidity or low external temperatures, and/or at least a fan 28, which is connected, through an electrical conductor 16 and a clamp 29, with a thermostat 9 mounted on the board 27, able to extract the heat generated by the camera 22 and to take said heat outside the case 10, in order to enable the camera 22 to operate in a correct range of operating temperature values.

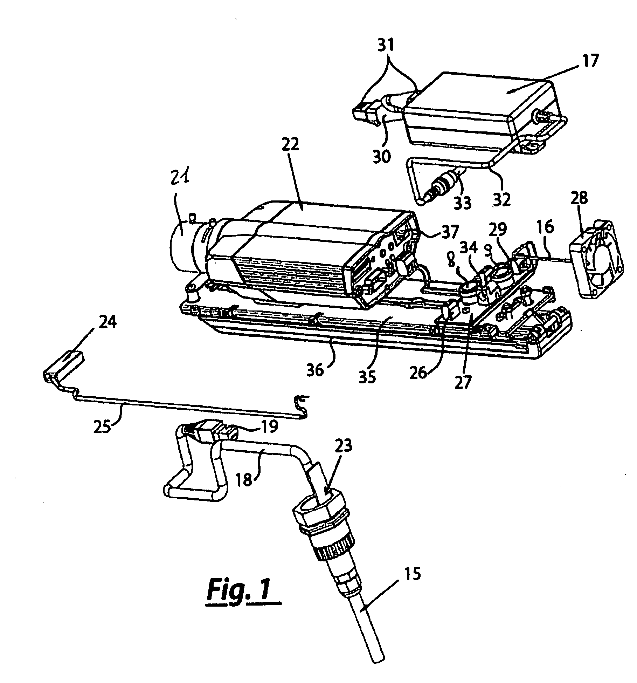

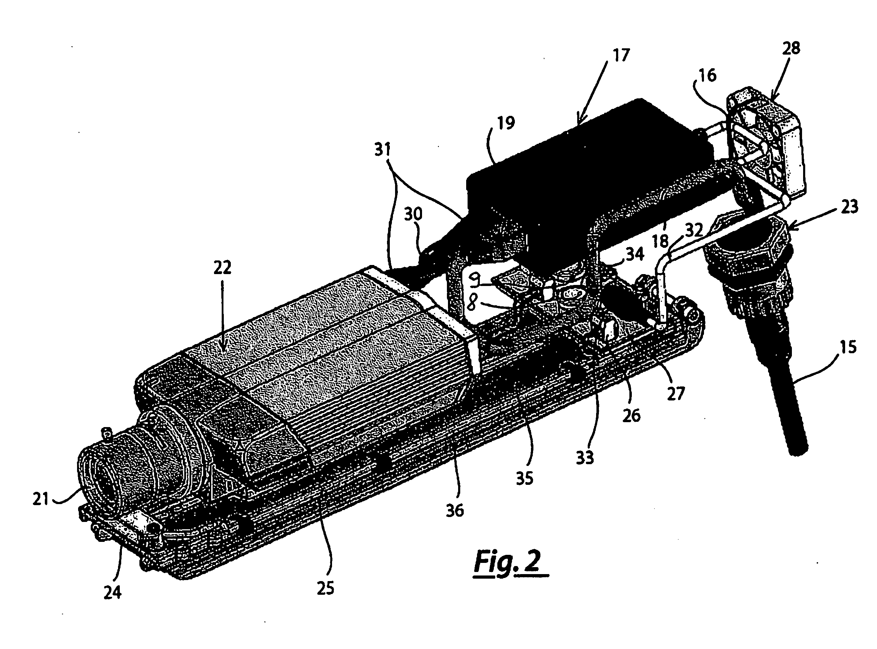

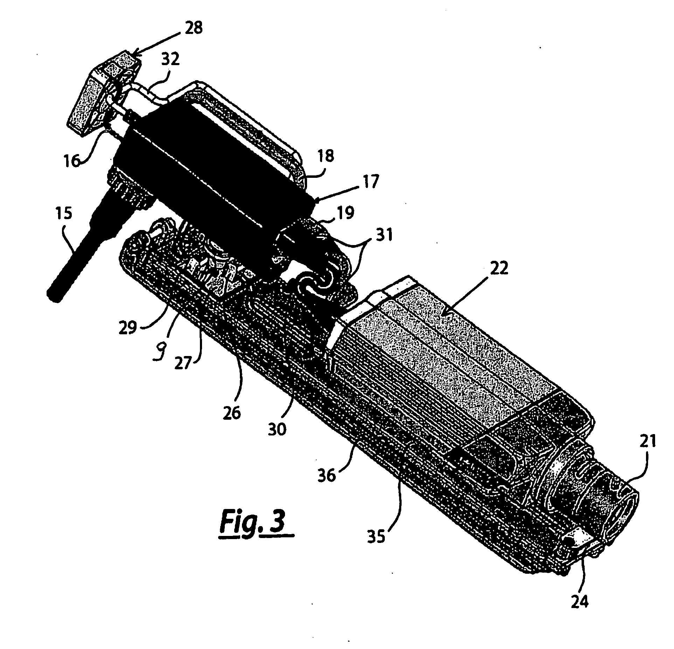

According to the invention, in order to have a power source for said fittings and thus obtain a complete functionality of the camera 22, a splitter 17 is provided which is compatible with the so-called "network cameras" or "IP cameras"; the splitter 17 is able to supply, only through the Ethernet cable 15, both the mains supply signal and a supply voltage (Fig. 1-3).

The splitter 17, which is placed inside the case 10, is thus able to provide its outputs, through the wire 18 and the connector 19, with the mains supply, which is separated from the supply voltage.

The supply voltage, which is also supplied by the conductor 30 and by the connectors 31 allowing connection between the splitter 17 and the camera 22 through the socket 37, may be provided to the fittings (the heating resistor 24 and/or the fan 28), through the conductor 32 and through the connector 33, which can be inserted into the terminal 34 of the board 27.

This also allows to correctly feed cameras 22 of the type so-called "network cameras" or "IP cameras" which are not directly compatible with the operating mode PoE or HiPoE (an operating mode according to which, through only the mains supply cable, it is possible to supply the camera both with the mains supply signal and with the supply voltage required to operate said camera).

Using this type of connection, it will be enough for the installer simply to connect the splitter 17 with the camera 22 and with the Ethernet cable 15, on the one hand, and, on the other hand, with the mains supply clamp 34 of the circuit which is mounted on the board 27.

The installer should not therefore provide separate power sources, with obvious savings in terms of cost and simplicity of the installation and with greater safety, with respect to the prior art, because it is no longer required to have supply voltages, which sometimes are even dangerous, inside the case 10.

The installer can also access the various known types of "network cameras" or "IP cameras", even if said types of cameras are not compatible with the PoE or HiPoE operation mode, and it is thus possible to choose more freely the model with the technical characteristics which are better suited to the installation specific requests and on the basis of the availability of cameras.

There are therefore high advantages for the installer, in terms of easiness and quickness of installation and possibility of choosing the camera and practicality, economy and safety.

From the above description the features of the protection case capable of transmitting a digital video signal, which is the object of the present invention, are clear, as well as the resulting advantages are also clear.

Finally, it is clear that many variations can be made to the protection case of the invention, while not leaving the principles of novelty inherent to the inventive idea, as well as it is clear that in practical implementation of the invention, materials, shapes and sizes of the described component parts can be modified and replaced with other parts that are technically equivalent.

## Claims

1. Device to protect digital cameras (22) and connect them to a computer network by means of a Ethernet-type cable (15), in particular for IP type cameras, comprising a protection case (10) inside which the camera (22) is housed, the device comprising an electrical connection (23) to said Ethernet-type cable (15), by means of which a digital video signal is transmitted from the camera (22), and by means of which a supply voltage is supplied to the components of said camera (22), at least an electric heating element (24) and/or at least a fan (28) alto being housed inside said case (10), **characterized in that** the device comprises a PoE splitter (17), housed inside said case (10) and connected to said Ethernet-type cable (15) by means of a first connector (19), said splitter (17)
in addition to the connection to external Ethernet-type cable (15) having a first port directly connected to said camera (22) at least to receive said digital signal from it, and a second port, distinct from said first port,
outputting a supply voltage and connected to
a board (27) located inside said case (10) which in from is conneted to said electric heating element (24) and/or said fan (28)
and supplies each of them with an appropriate supply voltage.

2. Device as in claim 1, **characterized in that** said first port of the splitter (17) is connected with the camera (22) through at least a connector (31) and a conductor (30) connected to a socket (37) of the camera (22), for supplying to the camera (22) also the supply voltage.

3. Device as in claim 1 or 2, **characterized in that** case (10) comprises a closed tubular body defining at least a shooting window (20) facing, during use, a lens (21) of the camera (22).

4. Device as in claim 3, **characterized in that** said shooting window (20) is disposed in a position opposite said connector (23) connecting with the Ethernet cable (15).

5. Device as in claim 1, **characterized in that** it comprises a thermostatic unit (8, 9) electrically connected with said electric heating element (24) and/or with said fan (28) and mounted on said board (27).

## Patentansprüche

1. Vorrichtung zum Schützen von digitalen Kameras (22) und zum Verbinden dieser mit einem Computernetzwerk mittels eines Kabels (15) des Ethernet-Typs, insbesondere für Kameras des IP-Typs, aufweisend ein Schutzgehäuse (10), in dem die Kamera (22) aufgenommen ist, wobei die Vorrichtung aufweist: einen elektrischen Anschluss (23) an das Kabel (15) des Ethernet-Typs, mittels dessen ein digitales Videosignal von der Kamera (22) aus übertragen wird und mittels dessen den Bauteilen der Kamera (22) eine Versorgungsspannung zugeführt wird, mindestens ein elektrisches Heizelement (24) und/oder mindestens einen Lüfter (28), die ebenfalls in dem Gehäuse (10) aufgenommen sind, **dadurch gekennzeichnet, dass** die Vorrichtung einen PoE-Verteiler (17) aufweist, der in dem Gehäuse (10) aufgenommen ist und mittels eines ersten Anschlussstücks (19) mit dem Kabel (15) des Ethernet-Typs verbunden ist, wobei der Verteiler (17) zusätzlich zu der Verbindung mit dem externen Kabel (15) des Ethernet-Typs aufweist: einen ersten Anschluss, der direkt mit der Kamera (22) verbunden ist, um zumindest das digitale Signal von dieser zu empfangen, und einen zweiten Anschluss, der sich von dem ersten Anschluss unterscheidet, der eine Versorgungsspannung ausgibt und mit einer Platine (27) verbunden ist, die in dem Gehäuse (10) angeordnet ist, die wiederum mit dem elektrischen Heizelement (24) und/oder dem Lüfter verbunden ist und jeden von diesen mit einer geeigneten Versorgungsspannung versorgt.

2. Vorrichtung gemäß Anspruch 1, **dadurch gekennzeichnet, dass** der erste Anschluss des Verteilers (17) durch mindestens ein Anschlussstück (31) und einen Leiter (30), die mit einer Anschlussbuchse (37) der Kamera (22) verbunden sind, mit der Kamera (22) verbunden ist, um die Versorgungsspannung auch der Kamera (22) zuzuführen.

3. Vorrichtung gemäß Anspruch 1 oder 2, **dadurch gekennzeichnet, dass** das Gehäuse (10) einen geschlossenen rohrförmigen Körper aufweist, der mindestens ein Aufnahmefenster (20) aufweist, das während der Nutzung einem Objektiv (21) der Kamera (22) zugewandt ist.

4. Vorrichtung gemäß Anspruch 3, **dadurch gekennzeichnet, dass** das Aufnahmefenster (20) in einer dem mit dem Ethernetkabel (15) verbundenen Anschlussstück (23) entgegengesetzten Position angeordnet ist.

5. Vorrichtung gemäß Anspruch 1, **dadurch gekennzeichnet, dass** sie eine thermostatische Einheit (8, 9) aufweist, die mit dem elektrischen Heizelement (24) und/oder mit dem Lüfter (28) elektrisch verbunden und an der Platine (27) montiert ist.

## Revendications

1. Dispositif destiné à protéger des caméras numériques (22) et à les connecter à un réseau informatique grâce à un câble du type Ethernet (15), en particulier pour les caméras du type IP, comprenant un boîtier de protection (10) à l'intérieur duquel la caméra (22) est logée, le dispositif comprenant une connexion électrique (23) au dit câble du type Ethernet (15), grâce auquel un signal vidéo numérique est transmis à partir de la caméra (22), et grâce auquel une tension d'alimentation est fournie aux composants de ladite caméra (22), au moins un élément de chauffage électrique (24) et/ou au moins un ventilateur (28) étant également logés à l'intérieur dudit boîtier (10), **caractérisé en ce que** le dispositif comprend un séparateur standard (17), logé à l'intérieur dudit boîtier (10) et connecté au dit câble du type Ethernet (15) grâce à un premier connecteur (19), ledit séparateur (17), en plus de la connexion au câble extérieur du type Ethernet (15) ayant un premier port directement connecté à ladite caméra (22) pour au moins recevoir ledit signal numérique provenant de celle-ci, et un second port, distinct dudit premier port, sortant une tension d'alimentation et connecté à une carte (27) située à l'intérieur dudit boîtier (10) qui, à son tour, est connectée au dit élément de chauffage électrique (24) et/ou au dit ventilateur (28) et alimente chacun d'eux avec une tension d'alimentation appropriée.

2. Dispositif selon la revendication 1, **caractérisé en ce que** ledit premier port du séparateur (17) est connecté à la caméra (22) grâce à au moins un connecteur (31) et un conducteur (30) connecté à une prise (37) de la caméra (22), afin d'alimenter la tension d'alimentation également à la caméra (22).

3. Dispositif selon la revendication 1 ou 2, **caractérisé en ce que** le boîtier (10) comprend un corps tubulaire fermé définissant au moins un hublot de prise de vue (20) faisant face, pendant son utilisation, à un objectif (21) de la caméra (22).

4. Dispositif selon la revendication 3, **caractérisé en ce que** ledit hublot de prise de vue (20) est disposé dans une position opposée au dit connecteur (23) de connexion par le câble Ethernet (15).

5. Dispositif selon la revendication 1, **caractérisé en ce qu'**il comprend un appareil thermostatique (8, 9) raccordé électriquement au dit élément de chauffage électrique (24) et/ou au dit ventilateur (28) et monté sur ladite carte (27).
